Europäisches Patentamt

European Patent Office

Office européen des brevets

(19)

(11) **EP 1 691 072 A1**

(12) **EUROPEAN PATENT APPLICATION**
published in accordance with Art. 158(3) EPC

(43) Date of publication:
**16.08.2006 Bulletin 2006/33**

(51) Int Cl.:
*F03B 13/20* (2006.01)

(21) Application number: **04792381.8**

(86) International application number:
**PCT/JP2004/015149**

(22) Date of filing: **14.10.2004**

(87) International publication number:
**WO 2005/040603 (06.05.2005 Gazette 2005/18)**

(84) Designated Contracting States:
**ES GB**

(30) Priority: **23.10.2003 JP 2003362824**

(71) Applicant: **Sumitomo Electric Industries, Ltd.**
**Osaka-shi, Osaka 541-0041 (JP)**

(72) Inventors:
• **MIYAJIMA, KOJI,**
**Sumitomo Electric Industries, Ltd.**
**Osaka-shi, Osaka 5540024 (JP)**

• **KITADA, HIDEKI,**
**Sumitomo Electric Industries, Ltd.**
**Osaka-shi, Osaka 5540024 (JP)**

(74) Representative: **Cross, Rupert Edward Blount**
**Boult Wade Tennant**
**Verulam Gardens**
**70 Gray's Inn Road**
**London WC1X 8BT (GB)**

(54) **WAVE POWER GENERATOR**

(57) An object is to provide a wave power generator which can convert wave energy to electric energy with high efficiency and supply electric power of a large capacity at low cost and has a simple structure and is low in construction cost.

The wave power generator includes a heavy body 3 elastically supported by air springs 4 as elastic members in an enclosing wall 2 on a floating body 1 and an electromagnetic damper as a generating means 7 provided between the heavy body 3 and the floating body 1. The spring constant of the air springs 4 is adjustable by providing auxiliary tanks in the piston 6 and the floating body 1 so that the undamped natural frequency of the air spring is equal to or close to the frequency of waves within a predetermined frequency ratio $\omega/\omega_0$. Thus, the frequency of the spring system resonates with the frequency of waves, so that the relative movement of the power generating means 7 increases to a maximum and power generation is carried out with maximum efficiency.

Fig.1

**Description**

[Technological field]

The present invention relates to a wave power generator which converts wave energy (on the wave surface) to electric energy with high efficiency.

[Background Art]

Various researches about wave power generation for generating power by utilizing wave energy have been conducted. Non-patent publication 1 states that as mechanisms for primary conversion in wave power generation, there are the following three methods: 1) method of converting wave energy to compressed air energy, 2) method of converting wave energy to mechanical energy, 3) method of converting wave energy to water potential energy or water current energy, and various methods belonging to one of them have been tried by use of experiment apparatus. The publication reports that as an example of the method 1) of converting wave energy to compressed air energy, a wave power generator of the air turbine type has been proposed, and it has been installed on a floating structure "Kaimei" and experiments have been conducted.

The structural principle of this generator is that an air chamber having a constant cross-section is submerged in water to a predetermined depth, and the air turbine is rotated by an air current produced in the air chamber by an up-and-down movement of the sea surface due to waves, and electric power is taken out by a generator coupled to the air turbine. Various other devices have been produced experimentally and tested. But these existing wave power generators can generate a power of merely 30 to 350 kW and it is pointed out that the construction cost is high for its generation scale.

The reason why the generation output is small is because the efficiency of conversion of wave energy to electric energy is low, that is, the wave energy is not utilized sufficiently. The construction cost is thus necessarily high. If such generators are constructed as large-scale power generating facilities, a breakwater is also necessary as a safety measure. But breakwaters of the fixed type are expensive to construct because they have to be constructed in the sea, thus pushing up the entire construction cost. Also, such breakwaters tend to be damaged by Tsunamis and typhoons. Therefore, existing wave power generators are being used only as a power supplies for beacon lights of uninterruptible buoys.

As a typical small wave power generator, Patent publication 1 discloses "Wave power generating method and buoys for wave power generation". With the wave power generating method disclosed by Patent publication 1, a rope extending from a spring means fixed in a floating body is submerged in seawater, a weight is fixed to the lower end of the rope, and a power generating means engaging the rope is driven by relative movement of the floating body and the weight caused by up-and-down movement of wave surfaces to obtain electric energy. The wave power generating buoy utilizing this wave power generating method is structured to supply the power obtained by this method to a light source provided on top of a tubular body provided on the floating body.

But, with a buoy using such a wave power generator, because the weight is lightweight to prevent the floating body from sinking, and also, the resonance between the weight and the spring is not used for generation, the kinetic energy of the magnet produced by up-and-down movement of waves is small and thus the electric energy obtained is small. Thus, such generators can be used only for small-scale generation such as a wave power generating buoy.

On the other hand, a "portable power generator" is known from Patent publication 2 which efficiently converts, not wave energy, but kinetic energy produced by vibrations and pivoting of the generator during transportation to electric energy. This portable generator includes a power generating unit which comprises a rod-shaped permanent magnet inserted in a cylindrical body and retained by an axially movable spring, and a tubular coil wound around the cylindrical body. An AC voltage generated in the coil due to vibrations and pivoting of the portable generator during transportation is rectified by a rectifier and stored in a battery.

This generator does not require troublesome operation such as manual rotation and aims to efficiently convert kinetic energy due to vibrations and pivoting of the generator during transportation to electric energy by utilizing resonance produced by matching the axial resonance frequency of the permanent magnet to the average period of a main vibration source during transportation. The average period of a person when walking is about 1.9 Hz, but the average period of vibrations and pivoting during transportation of the generator varies from person to person and according to the carrying conditions. Thus, it is desired to provide means for adjusting the axial resonance frequency of the permanent magnet.

But, with such a portable generator, because it is supposed to be portable, the magnet as a weight has to be sufficiently lightweight. Also, its size is limited and it is difficult to increase the size of the magnet because the magnet has to be mounted in the cylindrical coil. Therefore, the kinetic energy obtained is small. Although this generator utilizes resonance between the weight and the spring, this method is not applicable to power generation for obtaining a large power output.

Non-patent publication 1: Magazine "Present State of Wave Power Generation" edited by Advisers' Council Promoting Office, Central Research Institute of Electric Power Industry.

Patent publication 1: Japanese patent publication 2-230969A
Patent publication 2: Japanese patent publication 2002-374661A

[Disclosure of the invention]

[Problems to be solved]

An object of the present invention is to provide a wave power generator which can convert wave energy to electric energy with high efficiency, which is simple in structure and is inexpensive to construct, and which can supply electric power of a large capacity at low cost.

[Means for solving the problems]

As a means for solving the abovementioned problems, this invention provides a wave power generator comprising a floating body floating on waves, a heavy body elastically supported on the floating body by an elastic member so that a damping force is produced between the floating body and the heavy body with the movement of the heavy body, and a power generating means for converting kinetic energy to electric energy, wherein a spring constant of the elastic member is preset so that the undamped natural frequency $\omega 0$ of the elastic member is close to the frequency $\omega$ of waves which vibrate the floating body within a predetermined range of the ratio $\omega/\omega 0$, thereby utilizing resonance of the elastic member with waves.

The wave power generator causes the vibration of the elastic member supporting the heavy body to resonate with vibrations of waves acting on the floating body and obtains a large amount of power by utilizing the resonance phenomenon. As the floating body moves up and down with waves and vibrates, a vertical vibration force acts on the heavy body mounted on the floating body, too. But the heavy body moves up and down with some time lag from the up-and-down movement of the floating body.

Thus, if the spring constant of the elastic member is preset so that the undamped frequency of the elastic member is equal to or close to the frequency of waves within a predetermined range of frequency ratio $\omega/\omega_0$, it is possible to cause the heavy body to move up and down for the maximum stroke, thereby making it possible to efficiently obtain electric power of maximum capacity by means of a generating means using an electromagnetic damper which utilizes variation in position in a straight direction. The frequency of waves varies with season, day and time even at the same place and differs largely from place to place. Therefore, it is desired that the spring constant of the elastic member be adjustable according to the varying frequency of waves.

Waves which can be utilized for power generation is said to be short-period gravity wave (0.1 to 1 second) to ordinary gravity wave (1 to 30 seconds) and a representative elastic member suited to them is an air spring. By changing the capacity of the air spring by use of an auxiliary tank, the undamped natural frequency of the air spring can be easily adjusted to 0.4 to 6.0 Hz, which is close to the frequency of waves. As the elastic member, a coil spring or a plate spring can be used, too. The type of the spring is not limited.

The floating body may be a housing which can float on waves even if it is not self-propelled. In this case, it may be structured so as to be towable by another ship. Also, the floating body may be a newly built ship or an existing ship having a self-advancing function and other members may be provided on or in the ship so as to form a wave power generator as a whole.

[Effect of the invention]

The wave power generator of this invention produces large kinetic energy by resonating the vibration of a system including the heavy body and the elastic member supporting it with vibrations of waves, and obtains electric energy by power generating means comprising an electromagnetic damper. Therefore, electric power of a large capacity can be generated with a simple structure and at low cost. By giving a self-advancing function to the floating body, the wave power generator can be sheltered from Tsunamis and typhoons. Thus, it is safe and can be used in a wide sea area.

[Brief description of the drawings]

[Fig. 1] Sectional view of the wave power generator embodying this invention
[Fig. 2a] Schematic view of the same
[Fig. 2b] Vibration model view
[Fig. 3] Graph showing the relationship between frequency ratio $\omega/\omega_0$ and z/x

[Fig. 4] Enlarged sectional view of a portion of a wave power generator according to a second embodiment of the invention
[Fig. 5] Schematic views of other embodiments

[Description of the numerals]

1. Floating body
2. Enclosing wall
3. Heavy body
4. Air spring
5. Diaphragm
6. Piston
7. Power generating means
8. Permanent magnet
9. Coil

[Best mode for embodying the invention]

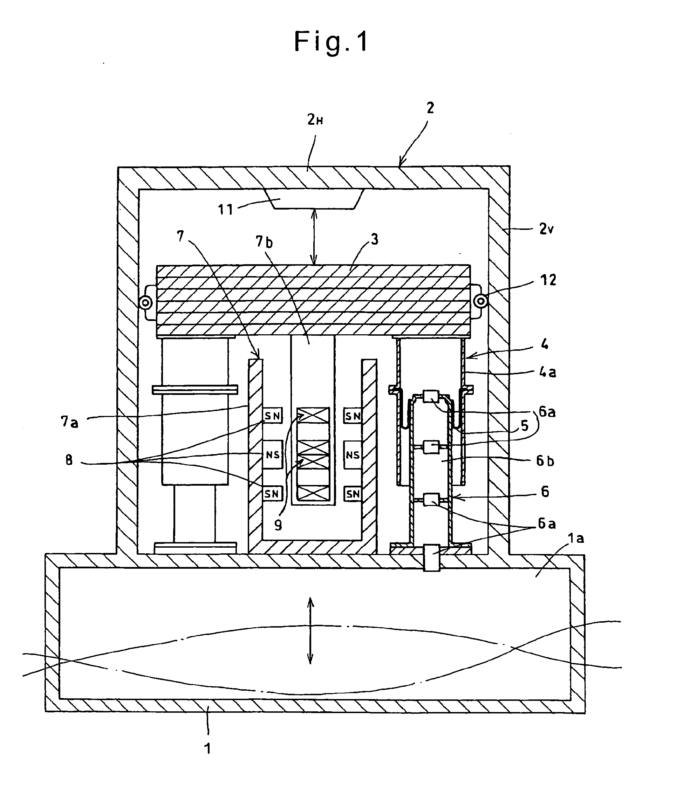

The embodiments of the present invention are described with reference to the drawings. Fig. 1 is a sectional view of the wave power generator embodying the present invention. The generator includes a floating body 1 having sufficient buoyancy not to sink even when a power generating unit to be described later is mounted thereon. The floating body may be a ship body itself which is movable by itself, or may be a ship body on or in which a base plate or a box-shaped body is mounted to form a floating body as a whole. The embodiment is shown schematically in the form of a sectional view of a box-shaped body. On the floating body 1, the power generating unit is installed in a chamber completely enclosed by walls $2_H$ and 2v. But if the generation system is installed in a ship, the chamber may not be completely sealed, but has to be at least capable of preventing leakage of water.

The power generating unit includes a heavy body (weight) 3 supported by an air spring 4 on the floating body, and a power generating means 7 in the form of an electromagnetic damper disposed between the floating body 1 and the weight 3. The weight 3 comprises a plurality of thick plates stacked one upon another and joined together. On both sides of the weight 3, rollers 12 are provided to guide the weight 3 along the vertical walls when it moves up and down due to up-and-down movement of waves, while being supported by the air springs.

There are provided a plurality (four in the embodiment) of the air springs 4 to support the weight 3 at a plurality of points. The air springs 4 have an undamped natural frequency $\omega_0$ which is variable by changing its air capacity. It is adopted as an ideal elastic member for resonance with the frequency of waves. The air capacity of each air spring 4 is changed by opening and closing on-off (control) valves 6a with a diaphragm 5 mounted between a piston 6 and the vertical wall and with chambers 6b in the piston 6 and a chamber 1a in the floating body 1 used as auxiliary tanks.

But, there are various other methods for changing the air capacity of the air springs 4 continuously or stepwise by providing an auxiliary tank in the piston 6 and partitioning it into a plurality of chambers or connecting it to an external tank. Any of such methods may be adopted. On the bottom of the horizontal wall $2_H$, there is provided a stopper 11 for limiting the upward movement of the weight 3.

The power generating means 7 comprises a plurality of pairs of permanent magnets 8 that are arranged one over the other with each pair horizontally opposed to each other such that the horizontally opposed portions of each pair have different polarities to each other and the vertically adjacent portions of any vertically adjacent magnets have different polarities to each other, in a frame or enclosure 7a. Coils 9 are provided between the respective pairs of permanent magnets 8 at intervals corresponding to the intervals between the adjacent pairs of permanent magnets 8. The radial gaps between the coils 9 and the permanent magnets 8 are preset to predetermined values and the coils 9 and the magnets 8 are provided below an intermediate height of a core rod 7b. The coils 9 are connected in series or parallel with each other by wires which are led out to the outside.

With the wave power generator of the above-mentioned structure, vertical vibrations of the floating body 1 caused by wave force is transmitted to the weight 3 through the air springs 4, and power is generated so that the generation capacity of the generating means 7, which is coupled to the weight 3, is maximum by regulating the air capacity of the air springs beforehand so that their undamped natural frequency $\omega_0$ is such that the weight 3 is vibrated in resonance with the frequency of waves, thereby maximizing the expansion displacement of the air springs 4.

Generally, the frequency of waves suited to wave power generation is considered to be short-period gravity waves (0.1 to 1 second) to ordinary gravity waves (hereinafter simply called gravity waves) (1 to 30 seconds). The frequency of the air springs is variable within a range of 0.4 to 6.0 Hz. The frequency of waves is measured by means of a vibration sensor and the air content in the air spring is regulated by the on-off valves so that the value $\omega_0$ is close to or equal to the wave frequency measured. The permanent magnets 8 form a magnetic circuit through a yoke which is the frame 7a enclosing the magnets 8. Electromotive force e is produced in the coils 9 by sliding the coils 9 in the magnetic circuit so as to vertically cut the magnetic circuit.

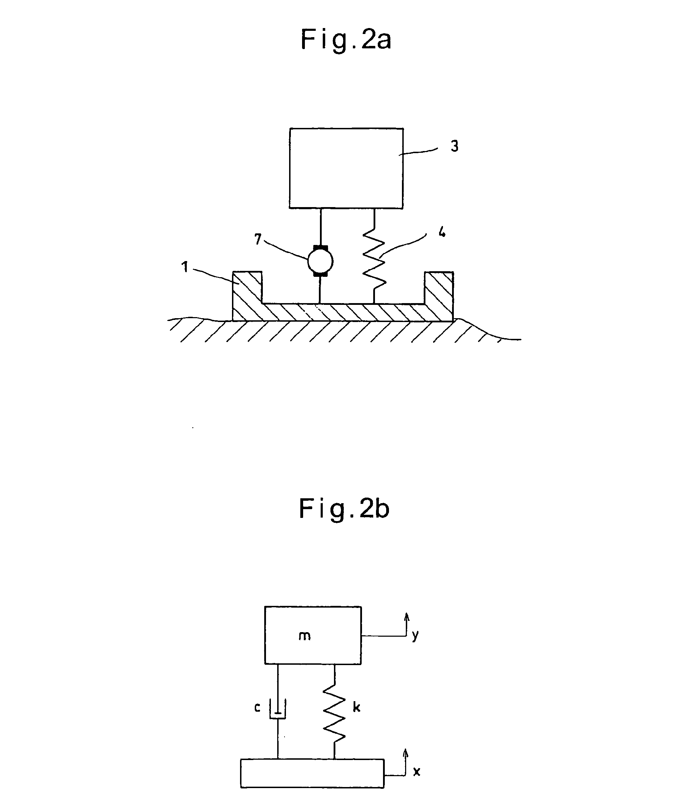

The principle of power generation by the wave power generator is based on the following logic. Fig. 2(a) is a schematic view showing the wave power generator in a simplified form, and Fig. 2(b) is a view of a vibration model. In Fig. 2(b), m is the mass of the weight 3, k is the spring constant of the air springs 4, c is the damping force produced by the electromotive force e of the electromagnetic damper as the power generating means 7, x is the vertical displacement of the floating body 1, and y is the vertical displacement of the weight 3. The spring constant k of the air springs is preset so that the air springs resonate with the abovementioned wave frequency (0.4 to 6 Hz).

The weight 3, which is supported by the abovementioned spring system, vibrates corresponding to the movement of the floating body, which moves up and down with the movement of waves, through large expansion and contraction of the air springs. The vertical movement of the weight 3 is expressed by the following kinetic equation:

$$\mathbf{my"} = -\mathbf{k(y-x)} - \mathbf{c(y'-x')} \quad \cdots(1)$$

where the symbol " denotes second-order differential and the symbol ' denotes first-order differential.

Here, expressing the amount of expansion and contraction between the floating body 1 and the weight 3 by z, z = y - x. We assume that vibrations given to the floating body 1 from waves is x = Xsin ωt in terms of vertical displacement. Since y = z + x, y" = z" + x" = z" - $\omega^2$Xsin ωt.

Thus, the equation (1) can be transformed as follows:

$$\mathbf{mz"} + \mathbf{cz'} + \mathbf{kz} = \mathbf{m\omega^2 Xsin\ \omega t} \quad \cdots(2)$$

Further, assuming that the undamped natural frequency ω0 = (k/m)$^{1/2}$, and the damping ratio ζ = c/(2mcω0), z/x will be as follows:

$$\mathbf{z \diagup x} = (\omega \diagup \omega_0)^2 \diagup \{[1 - (\omega \diagup \omega_0)^2]^2 + (2\zeta\omega \diagup \omega_0)^2\}^{1/2} \quad \cdots(3)$$

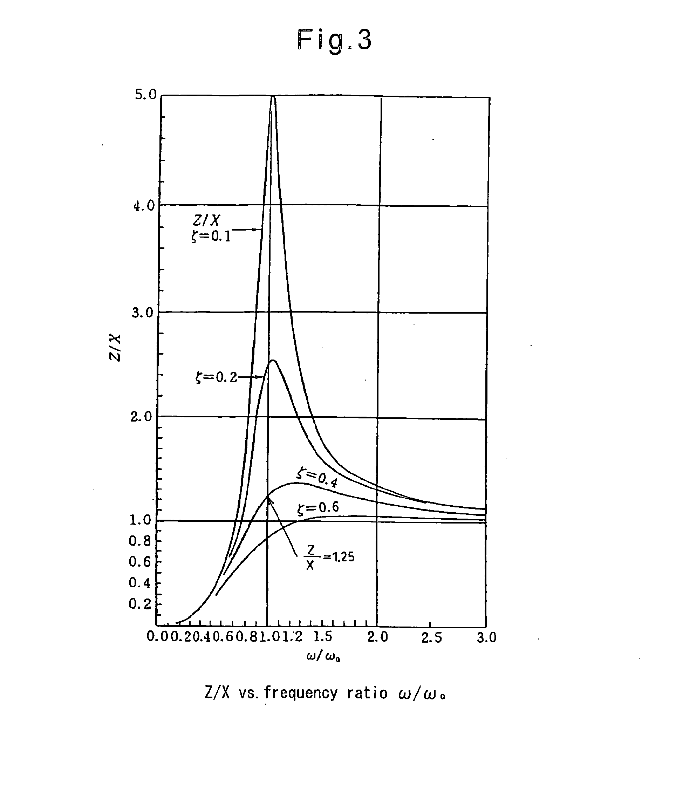

Fig. 3 shows the relationship between z/x and the frequency ratio $\omega/\omega_0$ for different damping ratios ζ. As will be seen from Fig. 3, the expansion displacement z becomes maximum when the frequency ratio $\omega/\omega_0$ = 1, that is, in the state where the forced frequency ω of the wave force is equal to the undamped natural frequency $\omega_0$ (resonance state). It is desired that the frequency ratio ω/ω0 be 1, but actually it is preferable that it is in the range of 0.1 ≦ ω/ω0 ≦ 2 and the spring constant of the elastic member can be set so that ω will be close to ω0.

The electromotive force e is expressed by e = BLv, where L is the length of the coil of the electromagnetic damper as the power generating means 7 and B is the magnetic flux density and v is the relative speed between the coil and the magnetic flux. In the resonance state when the expansion displacement z is maximum, the relative speed v is maximum and the maximum electromotive force emax is obtained (v = z'). Also, the damping force c is expressed by c = BIL, where I is the current of the coil. Therefore, if the length L of the coil or the flux density B is increased to increase the electromotive force e, the damping force c increases. But, this increases the damping ratio ζ, so that z/x decreases and the relative speed v decreases. Thus, it is necessary to properly adjust the balance between the damping force c and the mass m so that the damping ratio ζ will not be too large.

Though not shown, a power supply line is connected to the electromagnetic damper as the power generating means 7 through a voltage regulator and a back-flow prevention device to supply power to a battery and a power line. The battery may be structured to use it as part of the weight. Further, the wave power generator may have a self-advancing function, or the floating body may be a ship. By moving the floating body in a horizontal direction, it is possible to change the forced frequency ω of waves acting on the floating body and adjust the self-advancing speed so as to resonate with the undamped natural frequency $\omega_0$, thereby obtaining high electric power. The ship may be a newly built one or an existing one. If an existing ship is used as the floating body, low cost is achieved.

As an example of the embodiment, a wave power generator embodying this invention was structured which had a weight weighing 200 kg (mass 20.4 kg/(m/s$^2$)), air springs having a spring constant of 7899 N/m, and a power generating unit mounted on a floating body and including coils having a length L of 1000 m and a resistance of 10 Ω and permanent magnets having a magnetic flux density B of 0.1 T. If a wave force of 1 Hz is applied to the floating body, a damping force of 1000 N is generated. In this case, the damping ratio $\zeta = 0.39$ and the amplitude ratio z/x = 1.25. Vertical displacement of the floating body x = 0.4 m, expansion amount of the air springs z = 0.5 m, average relative speed $V_{AV} = 1.0$ m/s. Under these conditions, an electromotive force e = BLv = 0.1T x 1000 m x 1 m/s = 100 V and a current of 10 A were generated and a power of 1 KW was obtained (I x V = 10A x 100 V = 1000 W).

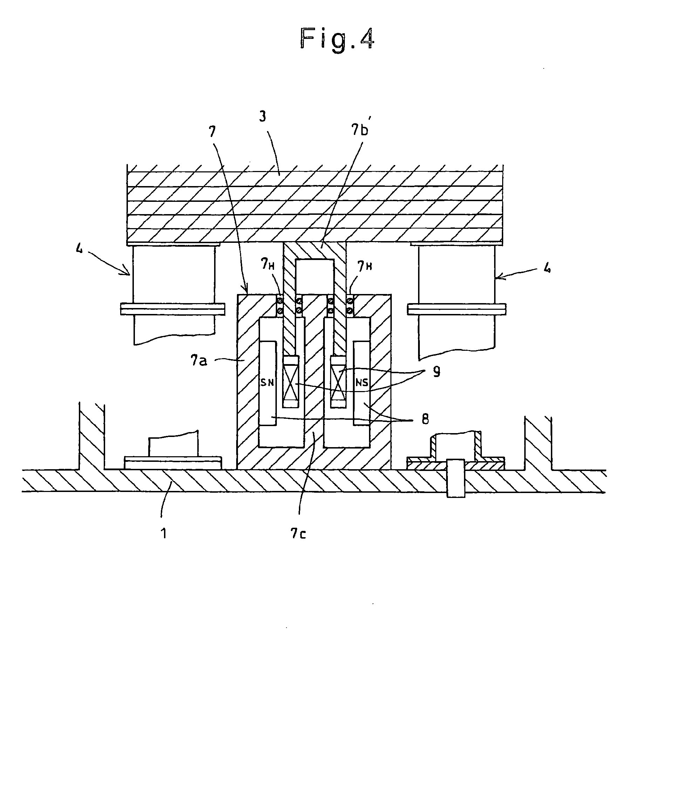

The power generating means 7 comprising an electromagnetic damper may be of any structure provided the magnet portion and the coil portion are separated from each other and movable relative to each other. Fig. 4 shows a section of a portion of the wave power generator of the second embodiment. In this embodiment, the power generating means 7 comprises a frame or peripheral wall 7a, a rod-shaped center core 7c provided in the center of the peripheral wall 7a so as to be integral with the peripheral wall 7a, a ring-shaped permanent magnet 8 mounted on the inner wall of the peripheral wall 7a, and a ring-shaped coil 9 loosely mounted around the center core 7c so as to be vertically movable. The coil 9 is coupled to the lower end of a forked support member 7b' having its upper end fixed to the bottom of the weight 3.

The legs of the support member 7b' are inserted in guide holes $7_H$ and guided thereby vertically as the support member 7b' moves up and down with the vertical movement of the weight 3. The air springs 4, weight 3, enclosure 2 and floating body 1 of the second embodiment are the same as those in the first embodiment. Thus, they are not shown and their description is omitted. The vibration model of this embodiment is as shown in Fig. 2. Also, the specifications of the wave power generator shown above in terms of numerical values are applicable to the second embodiment, too.

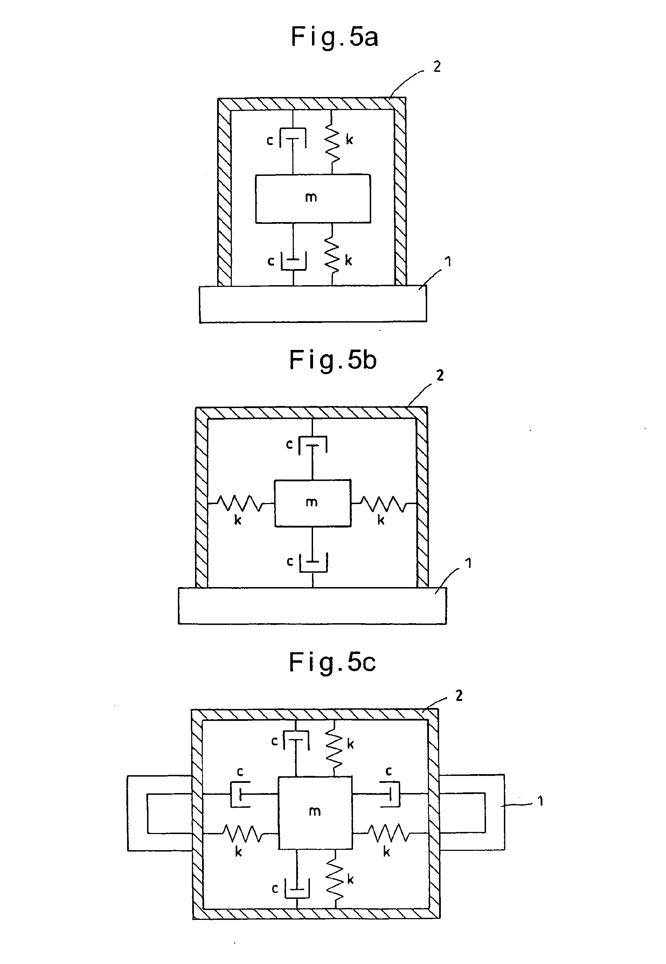

Further, in either of the wave power generators, the power generating means 7 including an electromagnetic damper and the air springs 4 as elastic members may be provided in a plurality of sets. Schematic views of such arrangements are shown in Fig. 5. Fig. 5(a) shows an arrangement in which two sets of electromagnetic dampers and elastic members are provided, one set over the weight 3 and the other set under the weight 3. Fig. 5(b) shows an arrangement in which two electromagnetic dampers are arranged in a vertical direction and two sets of elastic members are arranged in a horizontal direction. Fig. 5(c) shows an arrangement in which four sets of electromagnetic dampers and elastic members are provided, two sets in a vertical direction and the other two sets in a horizontal direction, with the floating body 1 provided at an intermediate position of the depth of the enclosure wall.

In each of these embodiments, assuming that a floating body of a size of a large tanker is used to support a weight weighing 100,000 tons, an electric power of 500,000 times, that is, 500,000 kW can be generated because the amount of power generated increases in proportion to the weight. But with an increase in the total weight, the amplitude of the floating body decreases and the average relative speed v can decrease accordingly. In such a case, it is preferable to provide a plurality of sets of power generating units on the floating body and use them in such a combination that their vertical movements do not interfere with each other.

With the wave power generators of these embodiments, trouble or malfunction hardly occurs because the power generating means 7 is in contact with nothing, and only maintenance required is replacement of the diaphragm 5. Thus, the maintenance cost of the generator is very low. Another advantage is that the generator according to the invention is less influenced by Tsunamis and typhoons because its inside is sealed by the enclosure 2.

INDUSTRIAL APPLICABILITY

The wave power generator according to the present invention can be used for various applications including as small power generator for uninterruptive buoys, as power generators of large capacity, for power supply to islands, marine leisure apparatus and facilities which have difficulty in obtaining power supply, and for power generation for lifeboats.

**Claims**

1. A wave power generator comprising a floating body floating on waves, a heavy body elastically supported on said floating body by an elastic member so that a damping force is produced between said floating body and said heavy body with the movement of said heavy body, and a power generating means for converting kinetic energy to electric energy, wherein a spring constant of said elastic member is preset so that the undamped natural frequency $\omega_0$ of said elastic member is close to the frequency $\omega$ of waves which vibrate said floating body within a predetermined range of the ratio $\omega/\omega_0$, thereby utilizing resonance of said elastic member with waves.

2. A wave power generator comprising a floating body floating on waves, a heavy body elastically supported on said floating body by an elastic member so that a damping force is produced between said floating body and said heavy body with the movement of said heavy body, and a power generating means for converting kinetic energy to electric energy, wherein a spring constant of said elastic member is preset so that the undamped natural frequency of said elastic member is equal to the frequency of waves which vibrate said floating body, thereby utilizing resonance of said elastic member with waves.

3. The wave power generator of claim 1 or 2 wherein said elastic member has a variable spring constant and an undamped natural frequency which is adjustable corresponding to a change in the frequency of waves.

4. The wave power generator of any of claims 1 to 3 wherein said elastic member is an air spring, and an auxiliary tank is connected to said air spring so that the capacity of said air spring can be adjusted, whereby the undamped natural frequency of said elastic member is adjustable in correspondence to a change in the frequency of waves.

5. The wave power generator of any of claims 1 to 4 wherein said power generating means is an electromagnetic damper.

6. The wave power generator of any of claims 1 to 5 wherein said floating body has a self-advancing function or said floating body is a ship.

# Fig.1

# Fig.2a

# Fig.2b

# Fig.3

Z/X vs. frequency ratio $\omega/\omega_0$

# Fig.4

# Fig.5a

# Fig.5b

# Fig.5c

## INTERNATIONAL SEARCH REPORT

| | International application No. |
| --- | --- |
| | PCT/JP2004/015149 |

**A. CLASSIFICATION OF SUBJECT MATTER**
Int.Cl⁷ F03B13/20

According to International Patent Classification (IPC) or to both national classification and IPC

**B. FIELDS SEARCHED**

Minimum documentation searched (classification system followed by classification symbols)
Int.Cl⁷ F03B13/20, F03B13/16, F03B13/18

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | US 4110630 A (Frank J. HENDEL), 29 August, 1978 (29.08.78), Column 2, line 57 to column 4, line 40; Figs. 1 to 3 (Family: none) | 1-6 |
| A | JP 1-56269 B2 (President of Osaka University), 29 November, 1989 (29.11.89), Column 3, line 26 to column 4, line 8; Fig. 1 & US 4464578 A & GB 2073824 A | 1-6 |

☒ Further documents are listed in the continuation of Box C.   ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07 December, 2004 (07.12.04) | 28 December, 2004 (28.12.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**INTERNATIONAL SEARCH REPORT**

| International application No. |
|---|
| PCT/JP2004/015149 |

C (Continuation). DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 124306/1976(Laid-open No. 43146/1978) (Fuyo Kaiyo Kaihatsu Kabushiki Kaisha), 13 April, 1978 (13.04.78), Claims; Figs. 1 to 3 (Family: none) | 1-6 |
| A | JP 8-19894 B2 (Chisso Corp.), 04 March, 1996 (04.03.96), Claim 1; Fig. 1 (Family: none) | 1-6 |

Form PCT/ISA/210 (continuation of second sheet) (January 2004)